Europäisches Patentamt

European Patent Office

Office européen des brevets

(11) Publication number: **0 397 863**
**A1**

(12) **EUROPEAN PATENT APPLICATION**
**published in accordance with Art.**
**158(3) EPC**

(21) Application number: 89900680.3

(22) Date of filing: 23.09.88

(86) International application number:
PCT/SU88/00188

(87) International publication number:
WO 90/03297 (05.04.90 90/08)

(51) Int. Cl.⁵: **B62D 53/00**

(43) Date of publication of application:
**22.11.90 Bulletin 90/47**

(84) Designated Contracting States:
**DE FR GB IT SE**

(71) Applicant: **MINSKY AVTOMOBILNY ZAVOD**
**BELORUSSKOGO OBIEDINENIA PO**
**PROIZVODSTVU BOLSHEGRUZNYKH**
**AVTOMOBILEI IMENI 60-LETIA VELIKOGO**
**OKTYABRYA**
**(BELAVTOMAZ), ul. Sotsialisticheskaya 2**
**Minsk, 220821(SU)**

(72) Inventor: **SIVOLOBOV, Viktor Nikolaevich**
**pr. Rokossovskogo, 125-13**
**Minsk, 220085(SU)**
Inventor: **VANTUKH, Sergei Ivanovich**
**ul. Kalinovskogo, 59-84**

**Minsk, 220103(SU)**
Inventor: **VYSOTSKY, Mikhail Stepanovich**
**ul. Vostochnaya, 30-87**
**Minsk, 220013(SU)**
Inventor: **IVANJUSHENKO, Stanislav**
**Alexandrovich**
**ul. Eniseiskaya, 7-39**
**Minsk, 220102(SU)**
Inventor: **MYSHKO, Alexandr Pavlovich**
**ul. Eniseiskaya, 11-3**
**Minsk, 220102(SU)**
Inventor: **SELIVANOV, Sergei Valerievich**
**ul. Korolya, 11-34**
**Minsk, 220004(SU)**

(74) Representative: **Godwin, Edgar James et al**
**MARKS & CLERK 57-60 Lincoln's Inn Fields**
**London, WC2A 3LS(GB)**

(54) **VEHICLE.**

(57) A vehicle comprises, interconnected by a frame (35), a cabin module (1) as well as a traction module (7) and a steering system module (13) each mounted on its own base (36 and 37).

FIG. 14

EP 0 397 863 A1

TRANSPORT VEHICLE

Technical Field

The present invention relates to the transport machine building and, more particularly, to a transport vehicle.

Background of the Invention

Known to the prior art is a construction of a transport vehicle comprising a front portion incorporating an engine and also detachable middle and rear portions which either in combination (the middle and rear ones) or only the rear portion is coupled to the front portion (DE, A, 3414617).

This construction limits the possibility of making up transport vehicles of different functional applications and suffers from an insufficient repairability because of a limited number of interchangeable portions.

Also known in the prior art is a construction of the transport vehicle comprising a front, middle and rear portions. The front and rear portions of this vehicle may be temporarily coupled for accomplishing the assembly operations on the conveyor and thereafter the middle portion of a required length is installed between the front and rear portions (GB, A, 2137938).

This construction makes it possible only to simplify the vehicle assembly but fails to provide any possibility of making up transport vehicles of different functional applications.

The closest in the technical concept to the present invention is a construction of the transport vehicle comprising a front module incorporating a cab, an axle and a steering gear, a traction module incorporating an engine with its servicing systems and a driving axle, a cargo module incorporating one or a plurality of cargo platforms, and coupling elements for connecting said modules with one another (cf. The Cargo Truck Arrangement. Powlonwski Janutz "Auto-Techn. mot", 1984, No. 6, pp.16-19).

The described construction has also a limited possibility for making up a range of transport vehicles of different functional applications because of a limited number of combinations obtained by coupling individual modules and an insufficient manoeuvrability as only one front axle is used for steering of this transport vehicle.

The closest in the technical concept to the present invention is a transport vehicle comprising a cab module, an engine with the transmission, driving axle and controls, a steering gear and elements for coupling said modules with one another (DE, B, 3517285).

The known construction comprises a common base which mounts the cab module, the units and parts of the chassis such as the engine with its servicing systems, the transmission, the driving axle, the steerable and driving wheels, and also the steering gear incorporating an actuating mechanism and a steering linkage, and auxiliary units. Said base also mounts a set of coupling elements for installation of cargo modules in the form of reservoirs for storage of fire-suppression substances, a cab with the controls of the fire-fighting equipment, and a module with the fire-fighting facilities in different combinations.

This construction makes it possible to obtain different combinations of the cargo modules depending on the operating conditions but excludes any possibility of making up such combinations with the chassis units, as each said unit performs only one specific function and is installed in one definite place on the common base. For example, said construction of the transport vehicle chassis excludes any possibility of installing one more steering gear or one more engine with its systems of the same make on the same common base. This limits the possibility of making up transport vehicles of different functional applications.

## Summary of the Invention

The present invention is essentially aimed at providing a transport vehicle with such structural elements and association with other mechanisms and modules which will make it possible to increase the number of combinations of the interconnected modules for making up transport vehicles of different functional applications.

This aim is attained by that a transport vehicle comprising a cab module, an engine with the transmission, driving axle and their controls, a steering gear and elements for coupling said modules with one another, according to the invention, is provided with a frame which mounts the cab module, while the engine with the transmission, driving axle and their controls and the steering gear are made each in the form of at least one traction module and at least one steering gear module each of which is provided with its own base associated with the frame, the steering gear module being directly associated with the frame and with the traction module.

Due to the fact that the steering gear and the traction mechanism are made in the form of individual modules they may be coupled to said frame in different combinations and numbers in order to obtain transport vehicles of different functional properties. For example, when the frame is connected with the cab, with one steering gear module and with one traction module a transport vehicle of a single-axle tractor type is obtained, by adding one more traction module to the frame a two-axle all-wheel drive transport vehicle of increased cross-country capacity is obtained, and by adding one more steering gear module to said vehicle a transport vehicle with all steerable axles is obtained, i.e. the vehicle of increased maneuvrability. Thus, due to said design embodiment it becomes possible to widen the range of transport vehicles of different functional applications.

It is prederred that a transport vehicle be provided with at least one of the two modules: an axle module comprising road wheels with the sispension and brake system, and a transport module comprising other road wheels with their own suspension and an other brake system, and auxiliary units, each module being provided with its own base secured on the frame.

The presence of a transport module makes it possible to make up a transport vehicle provided with additional equipment (extra fuel tank, spare wheel) for long hauls, while the presence of an axle module insures the possibility of making up transport vehicles of different load-carrying capacity for local hauls.

It is desirable that a tramsport vehicle be provided with a cargo module associated by its front portion with the frame and by its rear portion with at least one of the four modules: a traction module, a steering gear module, an axle module and a transport module.

The presence of a cargo module makes it possible to haul a load of any mass and volume, and also to increase tractive capabilities of the transport vehicle by using two and more traction modules, as well as to make up road trains on the base of single-axle or multi-axle tractors and semitrailers.

It is structurally expedient that in case of using at least two of the three modules: a traction module, a transport module and an axle module, the transport module be provided with a slewing circle comprising two rings one of which is fixedly secured on the cargo module and the second one is attached to one of said modules.

The presence of a slewing circle makes it possible to establish a kinematic connection between the cargo module and one of said modules for their self-alignment in the process of turning due to which the radius of turn of the transport vehicle is reduced and its maneuvrability is increased.

It is likewise desirable that in case of using a cargo module as the trailed vehicle in a road train the frame and the cargo module be provided with elements for their coupling.

The presence of such elements makes it possible to couple the cargo module (trailed vehicle) with single-axle or multi-axle tractors.

It is structurally advantageous that a device for coupling the frame and the cargo module with each other be provided with a catching means made on the frame in the form of rods, gripping means made on the front portion of the cargo module in the form of holes internally accommodating the rods, and longitudinal guides made on the frame which enter a circular slot made in the cargo module and are fixed therein.

Such a design embodiment of the device for coupling the frame and the module makes it possible to provide a rigid connection of the cargo module with the frame which allows a road train to be made up on the base of a single--axle tractor, while the presence of a circular slot on the cargo module allows a road train to be made up on the base of multi-axle tractors.

It is practically advantageous that a transport vehicle be provided with a subframe having a device for its coupling with the cargo module and a device for its coupling with the frame.

The presence of a subframe and devices for coupling with the cargo module and with the frame makes it possible to simplify the uncoupling of the subframe from the cargo module and to use said subframe for installing a required subassembly of modules thereon.

It is structurally desirable that at least one of the four modules: a traction module, a steering gear module, an axle module and a transport module be installed in the transport vehicle on the subframe.

The presence of a subframe makes it possible to uncouple from the cargo module at least one of four said modules and thus to convert the cargo module into a detachable cargo body, while the subframe with the remaining modules may be coupled to another cargo module which insures accomplishment of one-way and relay hauls.

It is also advantageous that at least two of the three modules: a traction module, a transport module and an axle module be installed in the transport vehicle on the subframe which improves maneuvrability of the transport vehicle.

It is preferred that a device for coupling the subframe with the cargo module be made in the form of a pin accommodated in holes made in the subframe and aligned with one another, while a device for coupling the subframe with the frame be provided with a drawbar having a towing loop at its end and made on the subframe, guides for the drawbar made on the frame and a catching means for the towing loop made on the frame in the form of a cavity wherein the towing loop is fixed.

Such a design embodiment makes it possible to provide a rigid coupling of the subframe with the cargo module and thus to combine an assembly of the modules into a single trailed road train, while the coupling of the subframe with the frame, for example, of a single-axle tractor makes it possible to convert a single-axle tractor into a multi-axle tractor capable of individual travelling.

## Brief Description of the Drawings

Now the invention will be described in more detail with reference to specific embodiments thereof taken in conjunction with the accompanying drawings, wherein:

Fig. 1 diagrammatically illustrates a side view of a cab module;

Fig. 2 diagrammatically illustrates a traction module;

Fig. 3 diagrammatically illustrates a steering gear module;

Fig. 4 diagrammatically illustrates a cargo module;

Fig. 5 diagrammatically illustrates an axle module;

Fig. 6 diagrammatically illustrates a transport module;

Fig. 7 diagrammatically illustrates a general side view of a transport vehicle with one traction module and with one steering gear module, according to the invention;

Fig. 8 diagrammatically illustrates a general side view of a transport vehicle with two traction modules and one steering gear module, according to the invention;

Fig. 9 diagrammatically illustrates a general side view of a transport vehicle with two traction modules and two steering gear modules, according to the invention;

Fig. 10 diagrammatically illustrates a general side view of a transport vehicle with one traction module, one axle module and one steering gear module, according to the invention;

Fig. 11 diagrammatically illustrates a general side view of a transport vehicle with one traction module, one transport module and one steering gear module, according to the invention;

Fig. 12 diagrammatically illustrates a general side view of a transport vehicle with one traction module, one steering gear module, one cargo module, one transport module and one axle module, according to the invention;

Fig. 13 diagrammatically illustrates a general side view of a transport vehicle with two traction modules, one steering gear module, one cargo module and one axle module, according to the invention;

Fig. 14 diagrammatically illustrates a general side view of a transport vehicle with two traction modules, one steering gear module, one cargo module and two axle modules, according to the invention;

Fig. 15 diagrammatically illustrates a general side view of a transport vehicle with one steering gear module, one traction module, one cargo module, one transport module, one axle module and a slewing circle, according to the invention;

Fig. 16 is a partial view in cut-away, illustrating a portion of the transport vehicle comprising a frame and cargo module with a device for their coupling, according to the invention;

Fig. 17 is a section taken on the line XVII-XVII of Fig. 16;

Fig. 18 is a section taken on the line XVIII-XVIII of Fig. 16;

Fig. 19 diagrammatically illustrates a general side view of a transport vehicle with a subframe and with devices for its coupling with the frame and the cargo module, according to the invention;

Fig. 20 is a partial view of the same as in Fig. 19 with a slewing ring;

Fig. 21 is a section taken on the line XIX-XIX of Fig. 19.

Best Mode for Carrying Out the Invention

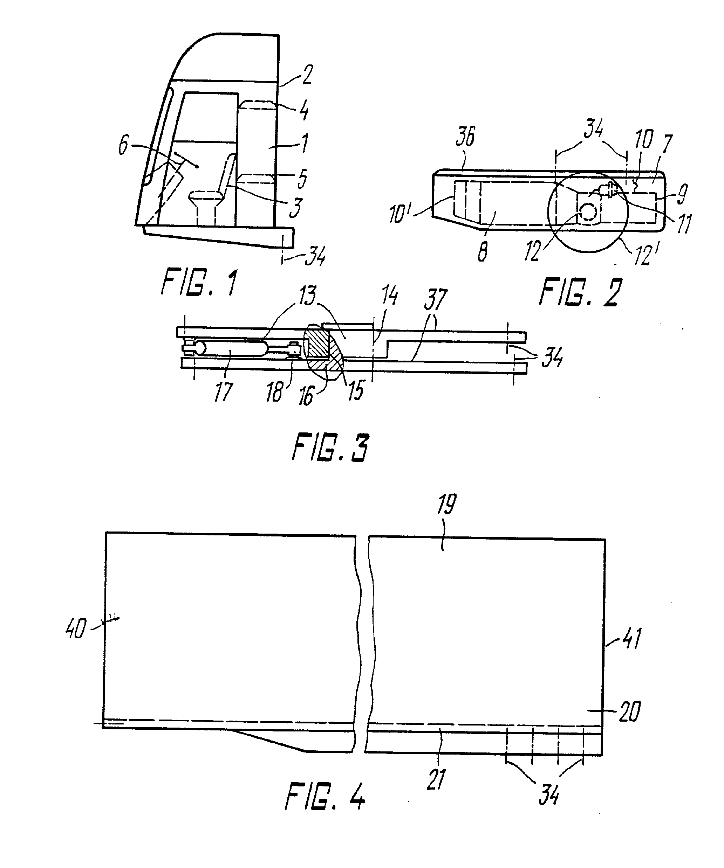

A cab module 1 illustrated in Fig. 1 comprises a closed compartment 2 accommodating a working place 3, berths 4 and 5 for rest of shift drivers or persons who accompany the cargo and transport vehicle controls 6.

Fig. 2 illustrates a traction module comprising an engine 8 with a transmission 9, engine and transmission servicing systems 10' and their controls 10, a brake system 11 and a driving axle 12 with wheels 12'.

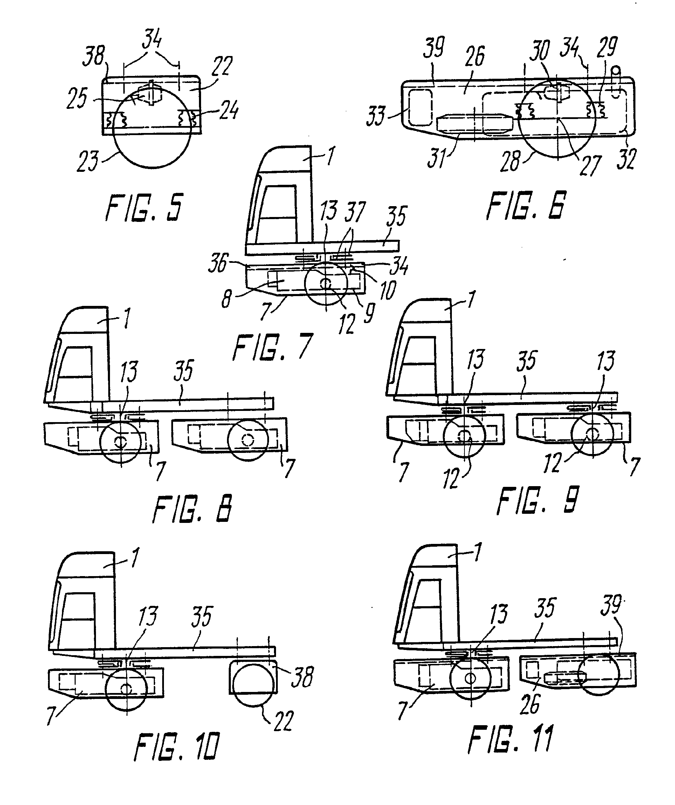

Fig. 3 illustrates a steering gear module 13 comprising an articulated joint 14 incorporating an upper ring 15 and a lower ring 16. Connected to the upper ring 15 is a mechanism 17 for relative turning of the rings, while the lower ring 16 mounts elements 18 for its connection to the turning mechanism 17.

Fig. 4 illustrates a cargo module 19 comprising a cargo compartment 20 and disposed on a platform 21.

Fig. 5 illustrates an axle module 22 comprising road wheels 23 with a suspension 24 and a brake system 25.

Fig. 6 illustrates a transport module 26 comprising an axle 27 carrying road wheels 28 with a suspension 29, a brake system 30 and auxiliary units, for example, a spare wheel 31, extra fuel tank 32, a box 33 for belongings and others.

The proposed transport vehicle illustrated in Fig. 7 incorporates the cab module 1, the engine 8 with the transmission 9, the driving axle 12 and their controls 10, and the steering gear 13. The transport vehicle is provided with elements intended for attachment of the above-mentioned module and units to one another.

According to the invention, the transport vehicle comprises a frame 35 which mounts the cab module. The engine 8 with the transmission 9, the driving axle 12 and their controls 10 are made in the form of the single traction module 7. The steering gear is made in the form of one steering gear module 13.

Each of the modules 7 and 13 (traction and steering gear) is provided with its own base 36 and 37 associated with the frame 35. The steering gear module 13 is directly associated with the frame 35 and with the traction module 7.

Fig. 7 illustrates a single-axle tractor provided with one traction module 7 and one steering gear module 13.

When one more traction module 7 is installed on the frame 35 (Fig. 8) a two-axle all-wheel drive transport vehicle is obtained and when one more steering gear module 13 is installed on the frame 35 (Fig. 9) a transport vehicle with both steerable axles 12 is made up.

A transport vehicle illustrated in Fig. 10 comprises the axle module 22 incorporating the road wheels 23 (Fig. 5) with the suspension 24 and the brake system 25, and installed on its own base 38 (Fig. 10) secured to the frame 35. In this case, a two-axle transport vehicle, for example, a chassis is made up.

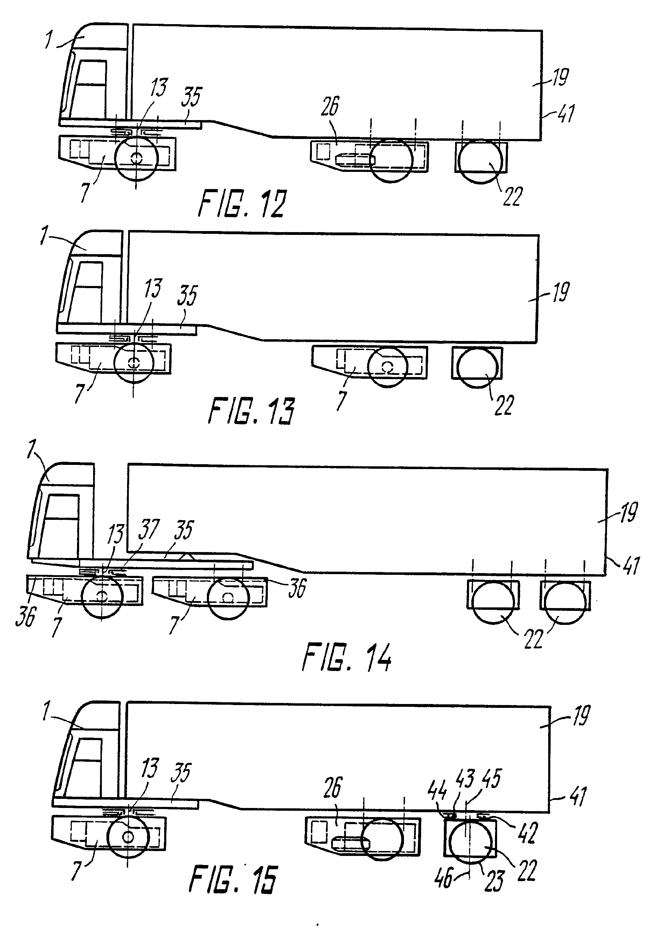

Fig. 11 illustrates a transport vehicle comprising the transport module 26 incorporating the axle 27 (Fig. 6) carrying the road wheels 28 with the suspension 29, the brake system 30 and auxiliary units, for example, the spare wheel 31, the extra tank 33 and others, and installed on its base 39 (Fig. 11) secured to the frame 35. In this case, a two-axle transport vehicle with a set of additional equipment is made up for long hauls.

To make up a road train on the base of single-axle or multi-axle tractors and semitrailers, it is proposed to use a transport vehicle comprising the cargo module 19 (Fig. 4)

associated by its front portion 40 with the frame 35 (Figs 7 through 11) and by its rear portion 41 (Fig. 4) with at least one of the four modules: the traction module 7 (Fig. 2), the steering gear module 13 (Fig. 3), the axle module 22 (Fig. 5) and the transport module 26 (Fig. 6).

Thus, referring to Fig. 12, there is illustrated a transport vehicle incorporating the traction module 7, the steering gear module 13, the axle module 22 and the transport module 26 associated with the rear portion 41 of the cargo module 19 due to which a multi-axle transport vehicle is made up which may be used as a drop-side truck, dump truck, container truck, etc.

If the transport module 26 of the transport vehicle is replaced with one more traction module 7 (Fig. 13) a transport vehicle of increased cross-country capacity is made up.

Fig. 14 illustrates a transport vehicle in which the frame 35 mounts two traction modules 7 on their bases 36, the steering gear module 13 on its base 37, the cargo mod module 19 which in turn is associated by its rear portion 41 with two axle modules 22, thereby forming a transport vehicle of the fifth-wheel tractor-trailer train type.

Fig. 15 illustrates a multi-axle transport vehicle, which may be used as a drop-side truck, container truck, etc., comprising the traction module 7 associated through the steering gear module 13 with the frame 35. Said frame 35 mounts the cargo module 19 to the rear portion 41 of which are coupled the transport module 26 and a slewing circle 42 consisting of two rings: an upper ring 43 and a lower ring 44 having a common axis 45 of rotation relative to each other. The upper ring 43 is rigidly coupled with the cargo module 19 and the lower ring 44, with the axle module 22. The axis 45 of rotation is disposed in front of an axis 46 of the wheels 23 passing in the vertical plane which insures self-alignment of the axle module 22 with the wheels 23 in the process of turning of the transport vehicle, thereby increasing the maneuvrability thereof.

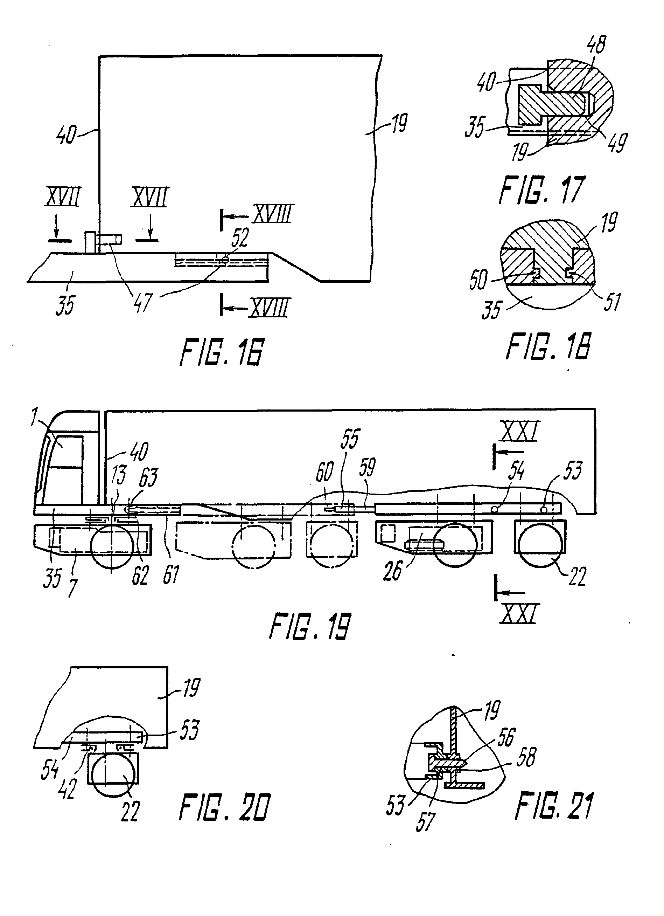

If the transport vehicle is used as a trailed module the frame 35 and the cargo module 19 are provided with a device 47 (Fig. 16) for their interconnection.

The device 47 comprises a catching means made in the frame 35 in the form of rods 48 (Fig. 17) and gripping means made on the front portion 40 of the cargo module 19 in the form of holes 49 accommodating the rods 48, and longitudinal guides 50 (Fig. 18) made on the frame 35 which enter a circular slot 51 made in the cargo module 19 and are fixed therein by means of pins 52 (Fig. 16).

A transport vehicle illustrated in Fig. 19 comprises a subframe 53 provided with a device 54 for its coupling with the cargo module 19 and a device 55 for its coupling with the frame 35. The subframe 53 mounts the transport module 26, the axle module 22 and the cargo module 19 which by its front portion 40 is associated with the frame 35 as is illustrated in Fig. 16. Besides the frame 35 mounts the steering gear module 13 and the traction module 7. Such a transport vehicle is essentially an articulated road train.

Fig. 20 illustrates a transport vehicle in which the subframe 53 is associated with the cargo module 19 by means of the device 54 and with the axle module 22, by means of the slewing circle 42 due to which an articulated road train of increased maneuvrability is made up.

The device 54 for coupling subframe 53 with the cargo module 19 is made in the form of a pin 56 (Fig. 21) accommodated in holes 57 and 58 made in the subframe 53 and in the cargo module 19 respectively, and aligned with one another.

A device 55 for coupling the subframe 53 with the frame 35 comprises a drawbar 59 (Fig. 19) with a towing loop 60 at its end made on the subframe 53, guides 61 for the drawbar 59 made on the frame 35 and a catching means for the towing loop 60 made on the frame 35 in the form of a cavity 62. The towing loop 60 is fixed in the cavity 62 by means of a pin 63.

When the subframe 53 (Fig. 19) is uncoupled from the cargo module 19 the subframe 53 carrying, for example,

- 12 -

modules 26 and 22 is rigidly coupled with the frame 35 (shown by dotted lines). As a result, the cargo module is converted into a detachable cargo body, while the subframe 53 rigidly coupled with the frame 35, for example, of a single-axle tractor converts the latter into a multi-axle transport vehicle capable of individual travelling.

Industrial Applicability

The invention may be used to advantage when effected at manufacturing plants and completed into transport vehicles of a modular construction of different properties in using organizations, depending on the aim of application.

CLAIMS:

1. A transport vehicle comprising a cab module (1), an engine (8) with a transmission (9), a driving axle (12) and their controls (10), a steering gear and elements (34) for attaching them to one another, c h a r a c t e r i z e d in that it is provided with a frame (35) which mounts the cab module (1), the engine (8) with the transmission (9), the driving axle (12) and their controls (10), and the steering gear each of which is made in the form of at least one traction module (7) and one steering gear module (13) each being provided with its own base (36, 37) associated with the frame 35, the steering gear module (13) being directly associated with the frame (35) and with the traction module (7).

2. A transport vehicle according to Claim 1, c h a r a c t e r i z e d in that it comprises at least one of the two modules: an axle module (22) incorporating road wheels (23) with a suspension (24) and a brake system (25), and a transport module (26) incorporating an axle (27) carrying other road wheels (28) with a suspension (29) thereof, and an other brake system (30) and auxiliary units (31, 32, 33), each module (22, 26) being provided with its base (38, 39) secured on the frame (35).

3. A transport vehicle according to Claim 1, c h a r a c t e r i z e d in that it comprises a cargo module (19) associated by its front portion (40) with the frame (35) and by its rear portion (41) with at least one of the four modules: the traction module (7), the steering gear module (13), the axle module (22) and the transport module (26).

4. A transport vehicle according to Claim 3, c h a r a c t e r i z e d in that in the case of using at least two of the three modules: the traction module (7), the transport module (26) and the axle module (22), said vehicle comprises a slewing circle (42) consisting of two rings (43 and 44) of which one ring (43) is rigidly secured on the cargo module (19) and the second ring (44) is secured on one of said modules (7 or 22, or 26).

5. A transport vehicle according to Claim 4, c h a - r a c t e r i z e d  in that in the case of using the cargo module (19), there is provided a device (47) for connecting them with each other.

6. A transport vehicle according to Claim 5, c h a - r a c t e r i z e d  in that the device (47) for connecting the frame (35) and the cargo module (19) with each other, comprises a catching means made on the frame (35) in the form of rods (48), gripping means made in the front portion (40) of the cargo module (19) in the form of holes (49) accommodating the rods (48) and longitudinal guides (50) made on the frame (35) which enter a circular slot (51) made in the cargo module (19) and are fixed therein.

7. A transport vehicle according to Claim 1, c h a - r a c t e r i z e d  in that it is provided with a subframe (53) which has a device (54) for its connection with the cargo module (19) and a device (55) for its connection with the frame (35).

8. A transport vehicle according to Claims 4 and 7, c h a r a c t e r i z e d  in that at least one of the four modules: the traction module (7), the steering gear module (13), the axle module (22) and the transport module (26) is installed on the subframe (53).

9. A transport vehicle according to Claims 4 and 7, c h a r a c t e r i z e d  in that at least two of the three modules: the traction module (7), the transport module (26) and the axle module (22) are installed on the subframe (53).

10. A transport vehicle according to Claim 7, c h a - r a c t e r i z e d  in that the device (54) for connecting the subframe (53) with the cargo module (19) is made in the form of a pin (56) accommodated in holes (57 and 58) made in the subframe (53) and in the cargo module (19), and aligned with one another, while the device (55) for connecting the subframe (53) with the frame (35) comprises a drawbar (59) with a towing loop (60) at its end, made on the

- 15 -

subframe (53), guides (61) for the drawbar (60) made on
the frame (35), and a catching means for the towing loop
(60) made on the frame (35) in the form of a cavity (62)
in which the towing loop (60) is fixed.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**FIG. 16**

**FIG. 17**

**FIG. 18**

**FIG. 19**

**FIG. 20**

**FIG. 21**

# INTERNATIONAL SEARCH REPORT

International Application No PCT/SU 88/00188

## I. CLASSIFICATION OF SUBJECT MATTER (if several classification symbols apply, indicate all) 6

According to International Patent Classification (IPC) or to both National Classification and IPC

IPC⁴: B 62 D 53/00

## II. FIELDS SEARCHED

### Minimum Documentation Searched 7

| Classification System | Classification Symbols |
|---|---|
| IPC⁴: | B 60 P 3/00, B 62 D 53/00, 53/02, 53/06, 63/02, 65/00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | DE, A1, 3517285 (KONRAD ROSENBAUER KG), 21 November 1985, & JP, A, 61-50571, 12.03.86 <br> FR, A1, 2564409, 22.11.85 <br> GB, B, 2159777, 25.02.87 | 1 |
| A | GB, A, 2171370 (SCOTTISH & NEWCASTLE BREWERIES PLC), 28 August 1986 | 1 |
| A | US, A, 3411600 (THE AMERICAN-COLEMAN COMPANY), 19 November 1968 | 5,6 |
| A | DE, A1, 3500042 (KAROSSERIE HND FAHRZEUGBAU FAHNENBROCK), 3 April 1986 | 10 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 April 1989 (20.04.89) | 12 June 1989 (12.06.89) |
| International Searching Authority | Signature of Authorized Officer |
| ISA/SU | |

Form PCT/ISA/210 (second sheet) (January 1985)